(19) Europäisches Patentamt
European Patent Office
Office européen des brevets

(11) **EP 4 635 609 A1**

(12) **EUROPEAN PATENT APPLICATION**
published in accordance with Art. 153(4) EPC

(43) Date of publication:
**22.10.2025 Bulletin 2025/43**

(21) Application number: 23903793.0

(22) Date of filing: **17.11.2023**

(51) International Patent Classification (IPC):
**B01D 61/44** *(2006.01)*    **C01D 15/00** *(2006.01)*

(52) Cooperative Patent Classification (CPC):
**B01D 61/44; C01D 15/00**

(86) International application number:
**PCT/KR2023/018600**

(87) International publication number:
**WO 2024/128590 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 KR 20220177582**

(71) Applicants:
• **POSCO Holdings Inc.**
  **Pohang-si, Gyeongsangbuk-do 37859 (KR)**
• **RESEARCH INSTITUTE OF INDUSTRIAL
  SCIENCE &
  TECHNOLOGY
  Pohang-si, Gyeongsangbuk-do 37673 (KR)**

(72) Inventors:
• **LEE, Jae Myung**
  **Pohang-si, Gyeongsangbuk-do 37673 (KR)**
• **KIM, Dong Soo**
  **Pohang-si, Gyeongsangbuk-do 37671 (KR)**
• **PARK, Kwang Soo**
  **Ulsan 44706 (KR)**
• **AHN, Junkyu**
  **Pohang-si, Gyeongsangbuk-do 37641 (KR)**
• **KIM, Hye Jeong**
  **Pohang-si, Gyeongsangbuk-do 37673 (KR)**

(74) Representative: **Pfenning, Meinig & Partner mbB
Patent- und Rechtsanwälte
Theresienhöhe 11a
80339 München (DE)**

(54) **SEPARATION METHOD OF LITHIUM SALT USING BIPOLAR MEMBRANE**

(57)    The present embodiments provide a method for separating a lithium salt using a bipolar membrane, the method comprising:

introducing a lithium salt aqueous solution into a salt compartment located between an adjacent anion exchange membrane and a cation exchange membrane of a bipolar electrodialysis device; introducing water into an acid compartment located between an adjacent bipolar membrane and an anion exchange membrane; introducing water into a base compartment located between an adjacent bipolar membrane and a cation exchange membrane; and applying an electric current to the bipolar electrodialysis device to obtain an aqueous lithium hydroxide solution from the base compartment and, simultaneously, to obtain an acid aqueous solution as a byproduct from the acid compartment, wherein the method comprises controlling the concentration of the aqueous lithium hydroxide solution discharged from the base compartment or the concentration of the acid aqueous solution discharged from the acid compartment, so as to improve the current efficiency of the entire process.

【Fig. 1】

**Description**

## FIELD OF THE INVENTION

The present embodiments relate to a method for separating lithium salts using a bipolar membrane, and more particularly, to a method for separating lithium salts using a bipolar membrane in which current efficiency is improved.

## DESCRIPTION OF THE RELATED ART

Lithium sulfate can be electrochemically decomposed through ion exchange membranes into lithium hydroxide and sulfuric acid; however, at higher concentrations, back-contamination occurs as ions diffuse back through the membranes, resulting in the loss of decomposed substances and thereby decreasing current efficiency and economic viability.

Specifically, $H^+$ ions from concentrated sulfuric acid diffuse through the anion exchange membrane (AEM) into the salt compartment, while $OH^-$ ions from concentrated LiOH diffuse through the cation exchange membrane (CEM) into the salt compartment. These diffusions become more pronounced as the concentrations in the acid and base compartments increase. While such diffusion reduces the overall resistance of the bipolar electrodialysis (BPED) system-facilitating stable constant current operation-it may also lower the voltage applied across the membrane, consequently reducing the amount of substance decomposed via the membrane.

In addition, $SO_4^{2-}$ ions in the acid compartment are electrostatically driven to migrate through the bipolar membrane (BPM) into the base compartment, increasing the sulfur impurity content in the LiOH product. The amount of sulfur impurity passing through the BPM tends to increase with higher voltage applied across the BPM.

As such, depending on the concentrations in the acid and base compartments, the total amount of $H^+$ and $OH^-$ ions diffused through the membranes contributes to the dilution of the decomposed products, thereby reducing current efficiency. Changes in electrical resistance influence the applied voltage across the solution chambers and ultimately impact the impurity levels.

Accordingly, there is a need to develop a lithium salt separation method capable of improving current efficiency while minimizing impurities.

## TECHNICAL PROBLEM

An embodiment of the present invention is directed to providing a method for separating lithium salts using a bipolar membrane, in which the generation of impurities is reduced while improving current efficiency.

## TECHNICAL SOLUTION

According to one embodiment of the present invention, a method for separating lithium salts may include: introducing a lithium salt aqueous solution into a salt compartment located between an adjacent anion exchange membrane and a cation exchange membrane of a bipolar electrodialysis device; introducing water into an acid compartment located between an adjacent bipolar membrane and an anion exchange membrane; introducing water into a base compartment located between an adjacent bipolar membrane and a cation exchange membrane; and applying an electric current to the bipolar electrodialysis device to obtain an aqueous lithium hydroxide solution from the base compartment and, simultaneously, to obtain an acid aqueous solution as a byproduct from the acid compartment.

The method may further comprise controlling the concentration of the aqueous lithium hydroxide solution discharged from the base compartment or the concentration of the acid aqueous solution discharged from the acid compartment to improve the current efficiency of the overall process.

Controlling the concentration of the aqueous lithium hydroxide solution discharged from the base compartment may be carried out by measuring and controlling the pH value of the discharged aqueous lithium hydroxide solution.

Controlling the concentration of the acid aqueous solution discharged from the acid compartment may be carried out by measuring and controlling the pH value of the discharged acid aqueous solution.

The current efficiency and the ionic conductivity of the aqueous lithium hydroxide solution discharged from the base compartment or the acid aqueous solution discharged from the acid compartment may satisfy the following relationship:

$$(\text{efficiency, } \%) = -A \times \ln(S_m) + B$$

(wherein efficiency (%) is the current efficiency, $S_m$ is the ionic conductivity of the discharged base or acid solution, -50 < A < -10, and 50 < B < 250.)

The electrodialysis device may be constructed by stacking unit pairs each sequentially composed of a bipolar membrane, a spacer gasket, an anion exchange membrane, a spacer gasket, a cation exchange membrane, and a spacer gasket, and the final bipolar membrane may be in contact with a spacer gasket and a metal electrode.

Introducing water into the acid compartment located between the bipolar membrane and the anion exchange membrane may further comprise mixing the discharged acid aqueous solution into the water prior to introduction.

Introducing water into the base compartment located between the bipolar membrane and the cation exchange membrane may further comprise mixing the discharged aqueous lithium hydroxide solution into the water prior to introduction

## ADVANTAGEOUS EFFECTS

According to one embodiment of the present invention, there is an advantage in that the current efficiency of the lithium salt separation process can be improved by controlling the concentration of the discharged aqueous solution.

According to another embodiment of the present invention, there is an advantage in that the generation of impurities can be controlled by controlling the concentration of the discharged aqueous solution.

## BRIEF DESCRIPTION OF THE DRAWINGS

FIG. 1 is a schematic diagram of a bipolar electrodialysis device according to one embodiment of the present invention.

FIG. 2 schematically illustrates a method for separating lithium salts using a lab-scale electrodialysis device.

FIG. 3 shows the configuration of a lab-scale experimental apparatus for lithium salt separation.

FIG. 4 illustrates a control system interface of the lithium salt separation apparatus shown in FIG. 3.

FIG. 5 is a graph showing the current-voltage characteristics measured using the lithium salt separation apparatus of FIG. 3.

FIG. 6 presents the results of analyzing the variation in current efficiency in relation to changes in ionic conductivity in Example 5.

FIG. 7 presents the results of analyzing the variation in sulfur (S) impurity content in the generated basic aqueous solution according to changes in ionic conductivity in Example 5.

FIG. 8 presents the results of analyzing the variation in lithium (Li) impurity content in the generated acid aqueous solution according to changes in ionic conductivity in Example 5.

FIG. 9 presents the results of analyzing the variation in current efficiency in relation to sulfur concentration in the acid aqueous solution and lithium concentration in the basic aqueous solution generated in Example 5.

FIG. 10 illustrates the results of analyzing the variation in sulfur (S) impurity concentration in the produced basic aqueous solution, depending on the sulfur concentration in the produced acid aqueous solution and the lithium concentration in the produced basic aqueous solution in Example 5.

FIG. 11 illustrates the results of analyzing the variation in lithium (Li) impurity concentration in the produced acid aqueous solution, depending on the sulfur concentration in the produced acid aqueous solution and the lithium concentration in the produced basic aqueous solution in Example 5.

FIG. 12 illustrates the results of analyzing the variation in current efficiency according to the concentrations of the produced acid and basic aqueous solutions.

FIG. 13 illustrates the analytical results of the concentration ratio of the LiOH solution and the sulfur (S) impurity content in the basic aqueous solution.

FIG. 14 illustrates the correlation between the ionic conductivity of lithium hydroxide and the current efficiency according to Example 5.

## DETAILED DESCRIPTION OF THE EMBODIMENTS

In the description of the present invention, terms such as first, second, and third may be used to describe various elements, components, regions, layers, and/or sections, but are not intended to be limited thereto. These terms are only used to distinguish one element, component, region, layer, or section from another. Therefore, a first element, component, region, layer, or section described below may be referred to as a second element, component, region, layer, or section without departing from the scope of the invention.

The terminology used herein is intended only to describe specific embodiments and is not intended to limit the invention. The singular forms used herein include plural referents unless the context clearly dictates otherwise. The term "comprise" or "comprising" as used in the specification specifies the presence of stated features, regions, integers, steps, operations, elements, and/or components, but does not preclude the presence or addition of one or more other features, regions, integers, steps, operations, elements, and/or components.

Unless otherwise defined, all terms used herein including technical and scientific terms have the same meaning as commonly understood by one of ordinary skill in the art to which this invention belongs. Generally used terms that are defined in commonly used dictionaries should be interpreted to have a meaning consistent with their usage in the relevant technical field and the context of the present disclosure, and are not to be interpreted in an overly idealized or formal sense unless explicitly defined otherwise.

Hereinafter, embodiments of the present invention will be described in detail. However, these embodiments are provided by way of example only and are not intended to limit the present invention, which is defined solely by the scope of the claims that follow.

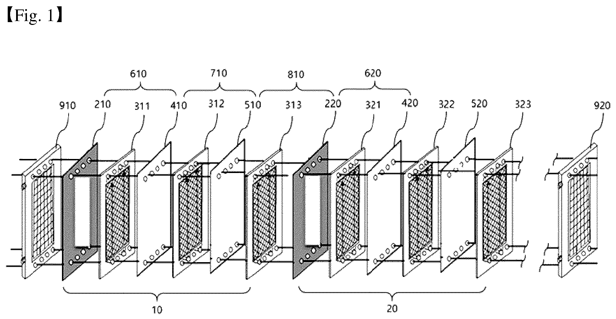

FIG. 1 schematically illustrates a bipolar electrodialysis device according to one embodiment of the present invention.

Referring to FIG. 1, the bipolar electrodialysis device according to an embodiment of the present invention may include unit pairs (10, 20) repetitively stacked between an anode (910) and a cathode (920). A first unit pair (10) may comprise, in sequential order: a bipolar membrane (210), a spacer gasket (311), an anion exchange membrane (AEM) (410), a spacer gasket (312), a cation exchange membrane (CEM) (510), and a spacer gasket (313). The first unit pair (10) may be positioned adjacent to a second unit pair (20) having the same configuration, such that the spacer gasket (313) of the first unit pair (10) is adjacent to the bipolar membrane (220) of the second unit pair (20).

The bipolar membrane (210), spacer gasket (311), and anion exchange membrane (410) of the first unit pair (10) may form an acid compartment (610); the anion exchange membrane (410), spacer gasket (312), and cation exchange membrane (510) may form a salt compartment (710); and the cation exchange membrane (510), spacer gasket (313), and bipolar membrane (220) may form a base compartment (810).

A concentrated lithium salt aqueous solution may be introduced into the salt compartment (710) of the first unit pair (10); a dilute acid or distilled water may be introduced into the acid compartment (610); and a dilute lithium hydroxide aqueous solution or distilled water may be introduced into the base compartment (810) to perform bipolar electrodialysis. At the same time, a concentrated lithium salt aqueous solution may also be introduced into the second unit pair (20) to perform electrodialysis in the same manner as the first unit pair (10).

In the bipolar electrodialysis device, water-splitting occurs at each bipolar membrane, and the cations and anions in the lithium salt migrate toward the cathode (920) and the anode (910), respectively, via electrophoretic effect.

More specifically, acidic ions react with protons generated by hydrolysis at the first bipolar membrane (210) near the anode, converting into acid; and lithium ions migrating through the cation exchange membrane (510) toward the cathode react with hydroxide ions generated from the second bipolar membrane (220), converting into lithium hydroxide (LiOH).

An exemplary overall reaction scheme may be as follows:

$$Li_2SO_4 \ (aq) \Leftrightarrow 2Li^+ \ (base \ chamber) + SO_4^{2-} \ (acid \ chamber)$$

$$H_2O \Leftrightarrow H^+ \ (acid \ chamber) + OH^- \ (base \ chamber)$$

$$Li_2SO_4 \ (aq) + 2H_2O \Leftrightarrow 2LiOH \ (aq, \ base \ chamber) + H_2SO_4 \ (aq, \ acid \ chamber)$$

In this case, the concentrated lithium salt aqueous solution introduced into the salt compartment (710) undergoes dissociation into lithium and acid ions, generating a dilute lithium salt solution that may be discharged from the electrodialysis device.

A concentrated acid aqueous solution may be generated and discharged from the acid compartment (610), while lithium hydroxide may be generated and discharged from the base compartment (810).

The electrodialysis device may be operated at a maximum voltage limited by the membrane supplier, or at a current level per unit membrane area within the supplier's specified range. Specifically, when the internal resistance of the device is low, maximum constant current may be applied; and when resistance increases, constant voltage operation may be employed.

Additionally, $H^+$ ions in the concentrated sulfuric acid may diffuse through the anion exchange membrane (410) into the salt compartment (710), and $OH^-$ ions from concentrated LiOH may diffuse through the cation exchange membrane (510) into the salt compartment (710). This diffusion tends to increase as the concentration in the acid compartment (610) and base compartment (810) increases. Moreover, $SO_4^{2-}$ ions in the acid compartment (620) of the second unit pair (20) may migrate through the second bipolar membrane (220) into the base compartment (810) of the first unit pair (10), thereby increasing the sulfur impurity content in the LiOH product. The amount of sulfur impurity passing through the bipolar membrane tends to increase with the voltage applied to the membrane.

The method for separating lithium salts using the bipolar electrodialysis device according to an embodiment of the present invention may include:

introducing a lithium salt aqueous solution into a salt compartment located between an adjacent anion exchange membrane and a cation exchange membrane of the bipolar electrodialysis device;
introducing water into an acid compartment located between an adjacent bipolar membrane and an anion exchange membrane;
introducing water into a base compartment located between an adjacent bipolar membrane and a cation exchange membrane; and
applying an electric current to the bipolar electrodialysis device to obtain a lithium hydroxide aqueous solution and, simultaneously, to obtain an acid aqueous solution as a byproduct.

As described above, the concentrated lithium salt aqueous solution is decomposed into lithium ions and acidic ions in the salt compartment of the electrodialysis device, and the resulting dilute lithium salt solution may be discharged.

The water or dilute acid aqueous solution introduced into the acid compartment of the electrodialysis device may be converted into a concentrated acid aqueous solution and discharged. The concentration, pH, or ionic conductivity of the discharged acid aqueous solution may be measured.

Meanwhile, the dilute lithium hydroxide aqueous solution introduced into the base compartment may be converted into a concentrated lithium hydroxide aqueous solution and discharged. The concentration, pH, or ionic conductivity of the discharged concentrated lithium hydroxide aqueous solution may be measured.

If the measured concentration, pH, or ionic conductivity of the aqueous solution exceeds a target value defined in the present invention, it may be adjusted-e.g., by increasing the amount of introduced water-so that the parameter returns to within the desired range.

In the present invention, the target values for the concentration, pH, or ionic conductivity of the aqueous solutions may be determined based on a target current efficiency that ensures economic viability of the lithium salt separation process.

Specifically, the current efficiency may be defined by considering the total charge supplied to the lithium salt separation system and the charge consumed for downstream concentration of the lithium hydroxide aqueous solution. The current efficiency ($\eta$) may be calculated using the following equation:

$$\eta = \frac{\text{LiOH conversion charge}}{\text{Charge consumption}} = \frac{\Delta[\text{LiOH}] \times \Delta\text{Mass}}{F \times \Delta Q}$$

where:
$\eta$ is the current efficiency, $F$ is the Faraday constant, $\Delta Q$ is the total charge supplied during the reference time, $\Delta[LiOH]$ is the change in lithium hydroxide concentration over the reference time, $\Delta Mass$ is the change in the mass of the lithium hydroxide aqueous solution over the reference time.

Experimental results in the present invention demonstrate that maintaining the ionic conductivity of the discharged aqueous solutions at a lower level leads to an increase in current efficiency and a reduction in the concentration of sulfur (S) impurities in the discharged concentrated lithium hydroxide solution, as well as a reduction in lithium (Li) impurity content in the discharged concentrated acid solution.

However, if the lithium hydroxide concentration is too low, the required concentration ratio in the downstream LiOH product concentration process increases, which leads to higher process costs. Therefore, to achieve optimal process economics, the cost savings from increased current efficiency must be balanced against the increased costs of the downstream concentration process, thereby defining an optimal current efficiency range.

In one embodiment of the present invention, the current efficiency and ionic conductivity in the lithium salt separation process may satisfy the following relationship:

[Equation 1]

$$(\text{efficiency},\%) = -A \times \ln(S_M) + B$$

Where:
(efficiency,%) is the current efficiency, $S_M$ is the ionic conductivity of the discharged base or acid aqueous solution, $-50 < A < -10$, $50 < b < 250$.

More specifically, the relationship may be expressed as:

$$[\text{Equation 2}]$$

$$(\text{efficiency},\%)= -A \times \ln(S_{LiOH}) + B$$

Where:
(efficiency,%) is the current efficiency, $S_{LiOH}$ is the ionic conductivity of the discharged lithium hydroxide aqueous solution, $-50<A<-10$, $50<b<250$.

The constants $A$ and B are process-specific variables determined based on the material system, type of bipolar membrane, system design, applied current, and other parameters. Once the lithium salt separation system is defined, these constants can be empirically obtained.

Accordingly, in the lithium salt separation process, an optimal ionic conductivity target value satisfying the desired current efficiency can be determined based on Equation 1 or Equation 2.

If the ionic conductivity exceeds the target value, the current efficiency falls below the optimal level, resulting in a decline in the economic efficiency of the lithium salt separation process.

Hereinafter, embodiments of the present invention will be described in detail. However, these embodiments are provided merely by way of example and are not intended to limit the scope of the invention, which is defined solely by the claims that follow.

**(Preparation of Lithium Salt Feedstock)**

A lithium salt separation experiment was conducted, and the composition of the lithium salt was measured using the ICP-AES (Inductively Coupled Plasma - Atomic Emission Spectroscopy) method. The results are shown in Table 1 below.

[Table 1]

| Content (g/L) | Li | S | Na | Ca | K | Si | Etc. |
|---|---|---|---|---|---|---|---|
| Stock Solution 1 | 10.75 | 26.9 | 0.829 | 0.004 | 0.486 | 0.009 | <0.003 |
| Stock Solution 2 | 10.76 | 26.7 | 0.832 | 0.005 | 0.493 | 0.009 | <0.003 |
| Stock Solution 3 | 11.02 | 25.7 | 1.049 | 0.005 | 0.7 | <0.003 | <0.003 |
| Stock Solution 4 | 11 | 25.61 | 1.039 | 0.005 | 0.699 | <0.003 | <0.003 |

(Lithium Salt Separation Experimental Method)

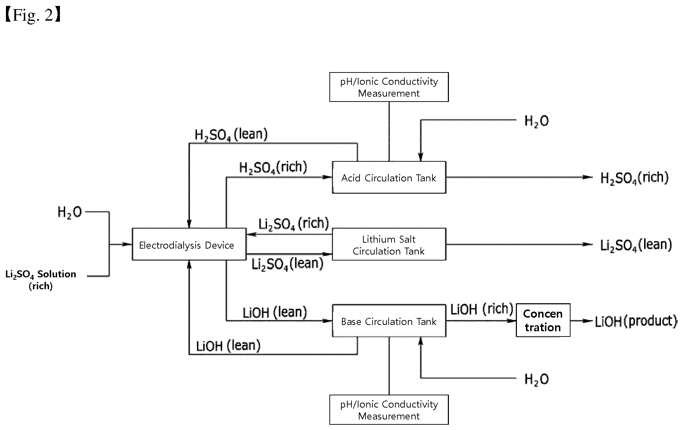

FIG. 2 schematically illustrates a method for separating lithium salts using a lab-scale electrodialysis device.

Referring to FIG. 2, in the experiment conducted using the lab-scale bipolar electrodialysis device according to the present invention, a concentrated lithium salt aqueous solution and water (or a dilute acid aqueous solution, or a dilute lithium hydroxide aqueous solution) are introduced into the bipolar electrodialysis device to produce and discharge a concentrated acid aqueous solution, a concentrated lithium hydroxide aqueous solution, and a diluted lithium salt aqueous solution. The method may further include recirculating the discharged concentrated acid aqueous solution and concentrated lithium hydroxide aqueous solution back into the electrodialysis device.

The concentrated lithium salt introduced into the salt compartment of the electrodialysis device is dissociated into lithium ions and acid ions, and the resulting dilute lithium salt solution may be discharged from the device.

The water or dilute acid aqueous solution is converted into a concentrated acid aqueous solution in the acid compartment of the device, and then delivered to a downstream acid circulation tank, where the ionic conductivity of the solution may be measured.

Similarly, the water or dilute lithium hydroxide aqueous solution is converted into a concentrated lithium hydroxide aqueous solution in the base compartment of the device, and then delivered to a downstream base circulation tank, where its ionic conductivity may also be measured.

If the measured ionic conductivity in the acid circulation tank exceeds the target conductivity value defined in the present invention, either the entire concentrated acid solution or a portion thereof may be discharged, and water may be added to dilute the solution before recirculating it to the acid compartment.

Likewise, if the measured ionic conductivity in the base circulation tank exceeds the target value, either the entire concentrated lithium hydroxide solution or a portion thereof may be discharged, and water may be added to dilute the solution before recirculating it to the base compartment.

**(Lithium Salt Separation Experimental Apparatus)**

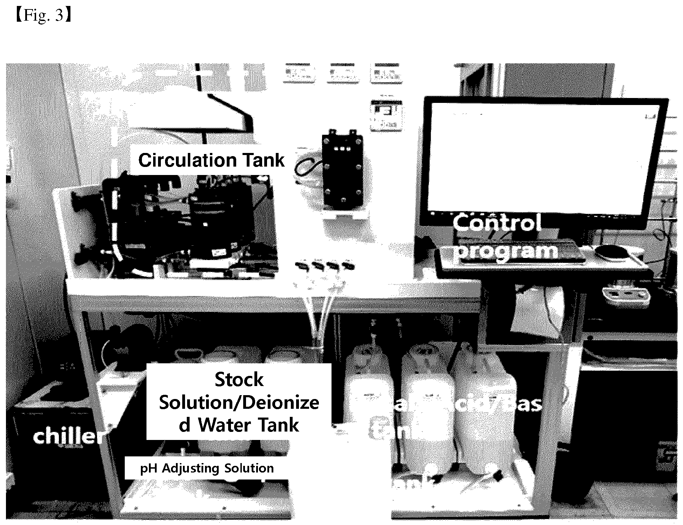

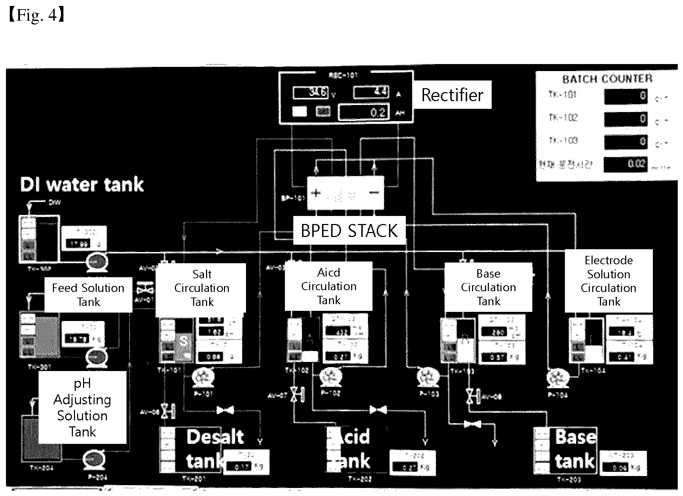

FIG. 3 shows the configuration of a lithium salt separation experimental apparatus, and FIG. 4 shows a control system interface of the apparatus in FIG. 3.

Referring to FIGs. 3 and 4, the lithium salt separation experimental apparatus of the present invention mainly includes:

a lithium salt storage tank and lithium salt circulation tank; an acid storage tank and acid circulation tank; a base storage tank and base circulation tank; a pH adjusting solution tank, distilled water tank, and an electrode solution circulation tank; a bipolar electrodialysis (BPED) stack; and a control system.

The BPED stack is configured as a three-compartment BPED stack, with each unit pair consisting of a BPM/spacer gasket/AEM/spacer gasket/CEM/spacer gasket structure. These unit pairs are stacked repetitively. The last BPM of each end is in contact with an end spacer gasket and a metal electrode (positive or negative), and each compartment contains circulating electrolyte solution to maintain electrical conductivity.

In the BPED stack, appropriate solutions are supplied to the compartments formed by the membranes and spacer gaskets. Specifically:

- Distilled water or dilute sulfuric acid is introduced into the acid compartment (formed by BPM/spacer gasket/AEM), where it is converted to concentrated sulfuric acid by $SO_4^{2-}$ ions supplied through the AEM.
- Distilled water or dilute LiOH is introduced into the base compartment (BPM/spacer gasket/CEM), where it is converted into concentrated LiOH.
- A concentrated $Li_2SO_4$ solution is introduced into the salt compartment (AEM/spacer gasket/CEM), which is discharged as a diluted $Li_2SO_4$ solution.

As the supplied solutions circulate through the BPED stack, their concentrations are altered, and the updated solutions are returned to their respective circulation tanks. The ionic conductivity of the circulating solutions in each tank is measured in real time. If the measured conductivity falls outside the target range, dilution or discharge and replacement is performed to control the solution's conductivity and, consequently, the concentration within the acid, base, and salt compartments.

The control system allows for real-time monitoring of key operational parameters, particularly the ionic conductivities of the solutions in the acid, base, and salt circulation tanks.

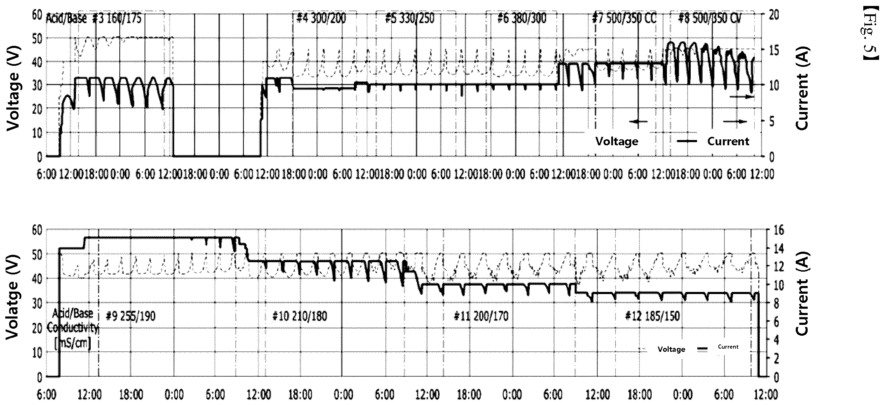

FIG. 5 shows the current-voltage characteristics obtained from the experiment using the lithium salt separation apparatus of FIG. 3.

As shown in FIG. 5, the lithium salt separation experiment was conducted at a current density of approximately 80 mA/cm$^2$ per unit membrane area.

(Examples **1-4**)

Using the lithium salt compositions listed in Table 1 as feedstock, lithium salt separation experiments were conducted by varying the ionic conductivity of the solutions introduced into the acid, base, and salt compartments. These ionic conductivities represent the values measured in the corresponding circulation tanks supplying solutions to each compartment.

The components and concentrations of the solutions discharged from the acid, base, and salt compartments were analyzed, and the results are summarized in Table 2 below.

[Table 2]

| | Content (g/L) | Li | S | Na | Ca | K | Si | Etc. |
|---|---|---|---|---|---|---|---|---|
| | Stock Solution 1 | 10.75 | 26.9 | 0.829 | 0.004 | 0.486 | 0.009 | <0.003 |
| Example 1 | deSalt 25mS/cm | 1.645 | 4.937 | 0.046 | <0.003 | 0.005 | 0.011 | <0.003 |
| | Acid 225mS/cm | 0.077 | 17.54 | 0.008 | <0.003 | 0.004 | 0.004 | <0.003 |
| | Base 190mS/cm | 8.428 | 0.094 | 0.732 | 0.004 | 0.451 | 0.004 | <0.003 |

(continued)

|  | Content (g/L) | Li | S | Na | Ca | K | Si | Etc. |
|---|---|---|---|---|---|---|---|---|
| Example 2 | Stock Solution 2 | 10.76 | 26.7 | 0.832 | 0.005 | 0.493 | 0.009 | <0.003 |
| | Salt 25mS/cm | 1.716 | 5.016 | 0.047 | <0.003 | 0.005 | 0.01 | <0.003 |
| | Acid 210mS/cm | 0.076 | 16.19 | 0.008 | <0.003 | 0.004 | <0.003 | <0.003 |
| | Base 180mS/cm | 8.109 | 0.055 | 0.678 | 0.004 | 0.402 | <0.003 | <0.003 |
| Example 3 | Stock Solution 3 | 11.02 | 25.7 | 1.049 | 0.005 | 0.7 | <0.003 | <0.003 |
| | Salt 25mS/cm | 1.799 | 5.282 | 0.072 | <0.003 | 0.009 | <0.003 | <0.003 |
| | Acid 200mS/cm | 0.077 | 15.14 | 0.008 | <0.003 | 0.004 | <0.003 | <0.003 |
| | Base 170mS/cm | 7.523 | 0.051 | 0.869 | 0.004 | 0.549 | <0.003 | <0.003 |
| Example 3 | Stock Solution 4 | 11 | 25.61 | 1.039 | 0.005 | 0.699 | <0.003 | <0.003 |
| | Salt 25mS/cm | 1.758 | 5.228 | 0.072 | <0.003 | 0.009 | <0.003 | <0.003 |
| | Acid 190mS/cm | 0.068 | 14.4 | 0.007 | <0.003 | 0.003 | <0.003 | <0.003 |
| | Base 150mS/cm | 6.444 | 0.043 | 0.753 | 0.003 | 0.432 | <0.003 | <0.003 |

It was confirmed that changes in the ionic conductivity of the acid and base solutions not only alter the main elemental composition but also affect the relative concentration of impurities. This is attributed to the fact that changes in ionic conductivity influence the diffusion behavior of impurities in the solution.

(Example 5)

An experiment was conducted to examine the variation in current efficiency according to changes in the ionic conductivity of the acid and base aqueous solutions, using the same method as in Example 1.

The results of the experimental analysis are summarized in Table 3 below.

[Table 3]

| batch | Current [A] | Ionic Conductivity [mS/cm] | | Current Efficiency [%] | Concentration of Sall Feed Solution [g/L] | | Desalinated Solution [g/L] | | Base Solution [g/L] | | Acid Solution [g/L] | |
|---|---|---|---|---|---|---|---|---|---|---|---|---|
| | [A] | Acid | Base | Base Li | Li | S | Li | S | Li | S | Li | S |
| #0 | 11 | 165 | 175 | 67.13% | 14.741 | 34.929 | 1.828 | 5.144 | 8.214 | 0.032 | 0.0634 | 12.66 |
| #1 | 9.1 | 185 | 150 | 61.37% | 10.997 | 25.611 | 1.758 | 5.228 | 6.444 | 0.0434 | 0.0679 | 14.396 |
| #2 | 11 | 160 | 175 | 61.91% | 10.562 | 26.194 | 1.6356 | 4.898 | 7.333 | 0.0344 | 0.0332 | 12.086 |
| #3 | 10.02 | 200 | 170 | 60.30% | 11.02 | 25.703 | 1.799 | 5.282 | 7.523 | 0.0509 | 0.0772 | 15.141 |
| #4 | 12.57 | 210 | 180 | 60.22% | 10.762 | 26.704 | 1.716 | 5.016 | 8.109 | 0.055 | 0.0762 | 16.189 |
| #5 | 15.11 | 225 | 190 | 57.97% | 10.754 | 26.901 | 1.645 | 4.937 | 8.428 | 0.094 | 0.077 | 17.544 |
| #6 | 16 | 160 | 175 | 57.48% | 10.562 | 26.194 | 1.6348 | 4.974 | 7.034 | 0.0331 | 0.0356 | 11.421 |
| #7 | 10 | 300 | 200 | 54.18% | 11.389 | 28.314 | 1.5585 | 4.829 | 9.306 | 0.1458 | 0.1514 | 23.853 |
| #8 | 10 | 330 | 250 | 51.92% | 11.389 | 28.314 | 1.5091 | 4.713 | 12.421 | 0.2537 | 0.2195 | 25.814 |
| #9 | 10 | 380 | 300 | 49.44% | 11.389 | 28.314 | 1.5065 | 4.743 | 16.68 | 0.5082 | 0.3918 | 31.692 |
| #10 | 13 | 500 | 350 | 48.91% | 11.229 | 28.403 | 1.336 | 4.476 | 21.896 | 1.048 | 0.673 | 45.703 |
| #11 | 16 | 500 | 350 | 43.47% | 11.229 | 28.403 | 1.435 | 4.723 | 22.323 | 1.121 | - | - |

EP 4 635 609 A1

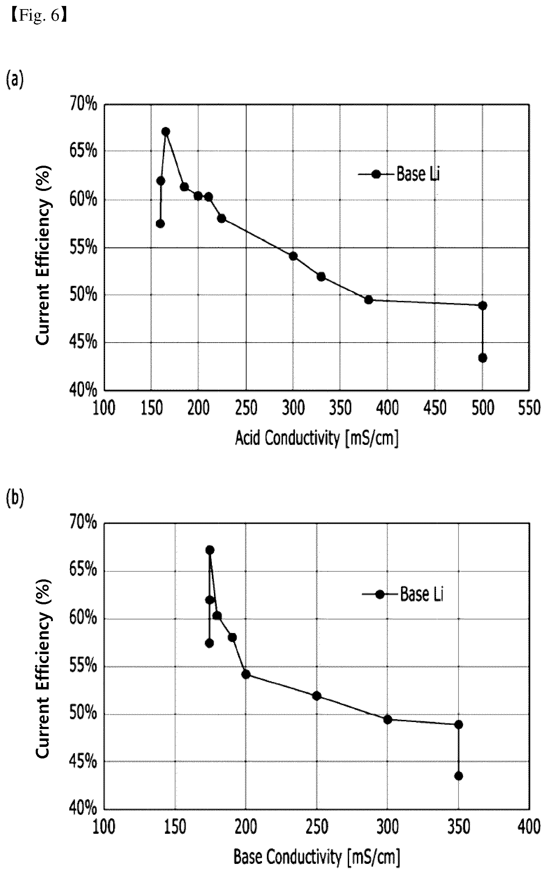

FIG. 6 presents the results of analyzing the change in current efficiency in accordance with variations in ionic conductivity in Example 5.

FIG. 6(a) shows the change in current efficiency with respect to variations in the ionic conductivity of the acid aqueous solution, and FIG. 6(b) shows the change in current efficiency with respect to the ionic conductivity of the base aqueous solution.

The current efficiency was calculated using the formula defined previously.

As shown in FIG. 6, it was confirmed that an increase in the ionic conductivity of either the acid or base solution leads to a decrease in current efficiency.

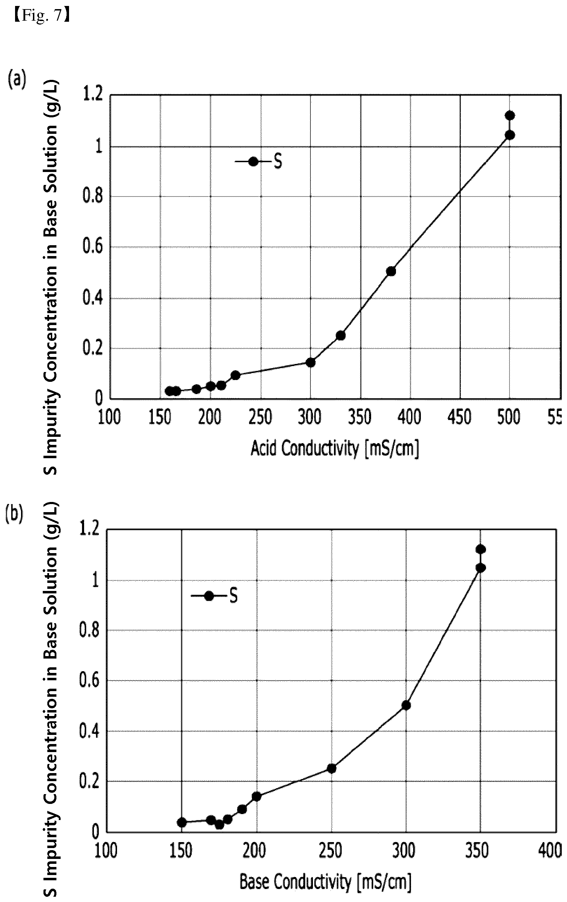

FIG. 7 presents the results of analyzing the change in sulfur (S) impurity content in the generated base aqueous solution according to the variation in ionic conductivity in Example 5. FIG. 7(a) shows the effect of acid solution conductivity, and FIG. 7(b) shows the effect of base solution conductivity.

As seen in FIG. 7, the sulfur impurity content in the generated lithium hydroxide solution increased with increasing ionic conductivity in both acid and base solutions. This is believed to result from the enhanced migration of sulfur impurities through the bipolar membrane (BPM) from the acid compartment to the base compartment under elevated acid concentrations.

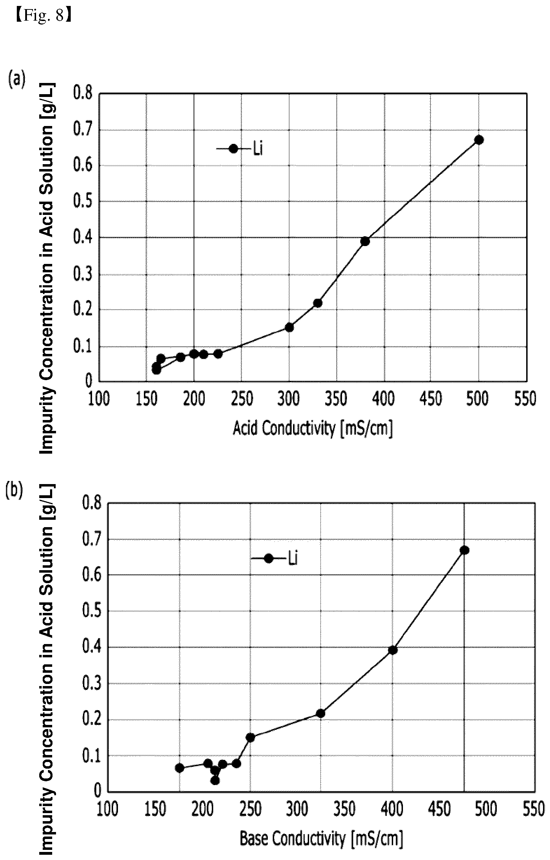

FIG. 8 shows the variation in lithium (Li) impurity content in the generated acid solution in response to changes in the ionic conductivity of the input solutions in Example 5.
FIG. 8(a) presents the effect of acid solution conductivity, and FIG. 8(b) presents the effect of base solution conductivity.

As observed in FIG. 8, the Li impurity content in the acid solution increases as the conductivity of the acid or base solution increases. This is presumably due to increased lithium ion diffusion from the base compartment across the membrane into the acid compartment under higher LiOH concentrations.

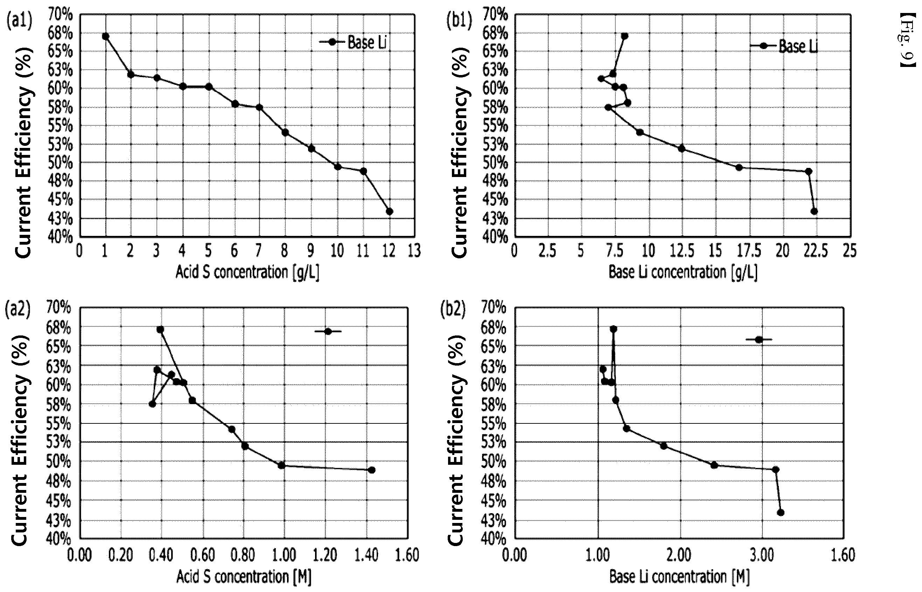

FIG. 9 presents the relationship between current efficiency and the S concentration in the generated acid solution as well as the Li concentration in the generated base solution.

FIG. 9(a1) and 9(a2) show the effects of S mass concentration and molar concentration, respectively, in the acid solution.

FIG. 9(b1) and 9(b2) show the effects of Li mass concentration and molar concentration, respectively, in the base solution.

As shown in FIG. 9, increased S concentration in the acid solution or increased Li concentration in the base solution correlates with a decline in current efficiency, which is attributed to ion diffusion across the membrane back into the salt compartment.

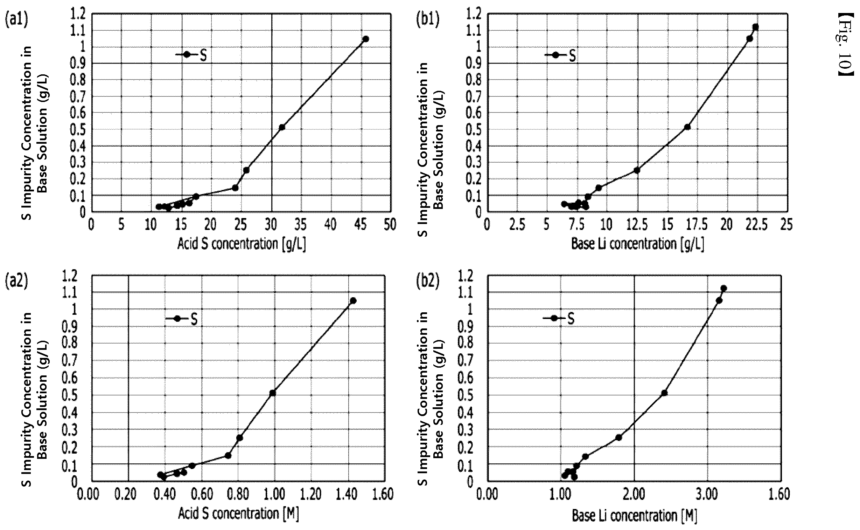

FIG. 10 shows the change in sulfur (S) impurity concentration in the base aqueous solution depending on the S concentration in the acid solution and the Li concentration in the base solution in Example 5.

FIG. 10(a1) and 10(a2) show the variation in S impurity mass and molar concentration in the base solution with respect to the S concentration in the acid solution.

FIG. 10(b1) and 10(b2) show the variation in S impurity mass and molar concentration with respect to the Li concentration in the base solution.

As indicated, both increasing S concentration in the acid and increasing Li concentration in the base lead to higher S impurity levels in the base solution, likely due to increased S ion migration through the BPM.

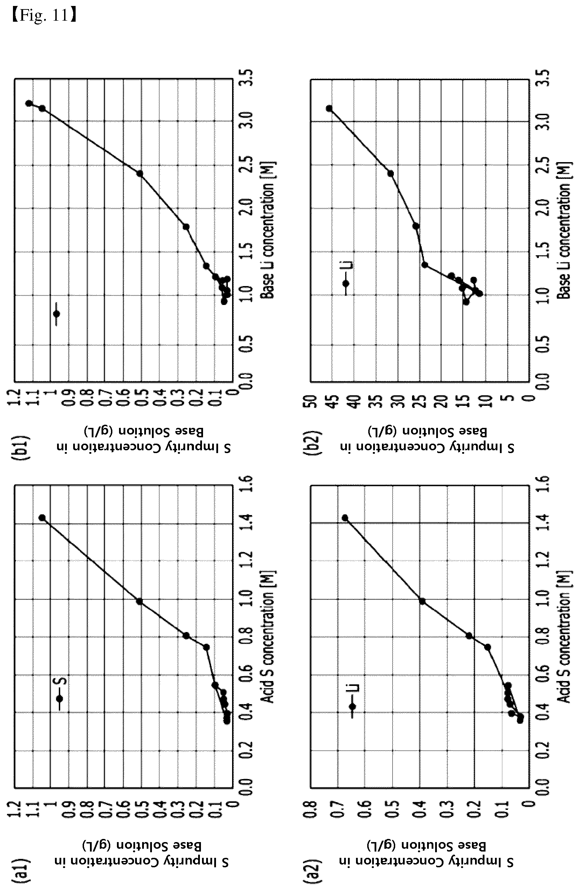

FIG. 11 illustrates the variation in lithium (Li) impurity concentration in the acid aqueous solution as a function of S concentration in the acid and Li concentration in the base solution. FIG. 11(a1) and 11(a2) show the variation in Li impurity mass and molar concentrations in the acid solution with respect to the S concentration.

FIG. 11(b1) and 11(b2) show the corresponding variations with respect to the Li concentration in the base solution.

The results confirm that Li impurity in the acid solution increases with both rising acid S content and base Li content, likely due to increased Li diffusion from the base to the acid compartment at higher concentrations.

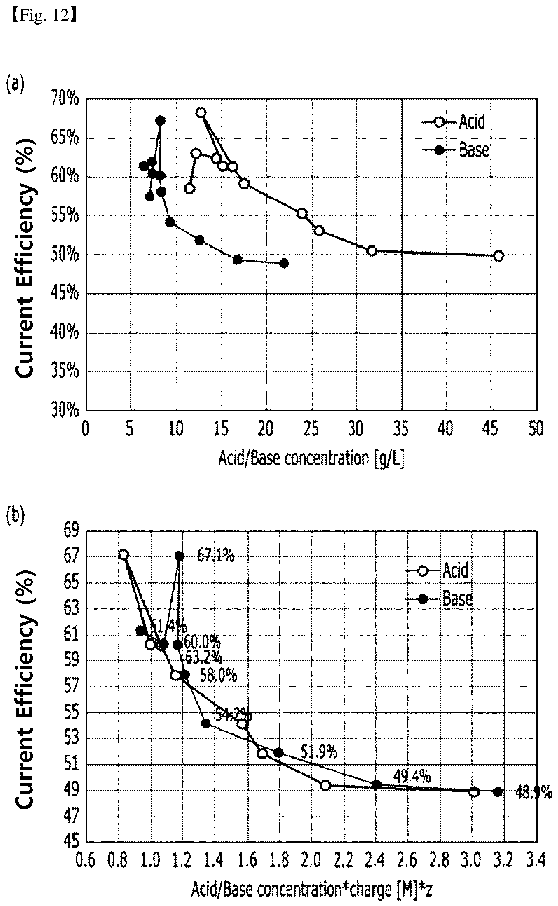

FIG. 12 presents the current efficiency variation as a function of the concentration of the generated acid and base aqueous solutions.

FIG. 12(a) shows the correlation using mass concentration, and FIG. 12(b) using normality (N).

FIG. 12(a) reveals that higher mass concentrations in either solution correspond to decreased current efficiency, attributable to increased ion diffusion across the membrane at higher concentrations. Interestingly, the influence of acid and base concentration on current efficiency is not symmetric.

FIG. 12(b) shows that both acid and base solution normalities are inversely related to current efficiency, and their trends appear nearly identical. Here, "normality" refers to the number of equivalents of solute per liter of solution (eq/L), with equivalents based on the number of $H^+$ ions released per mole.

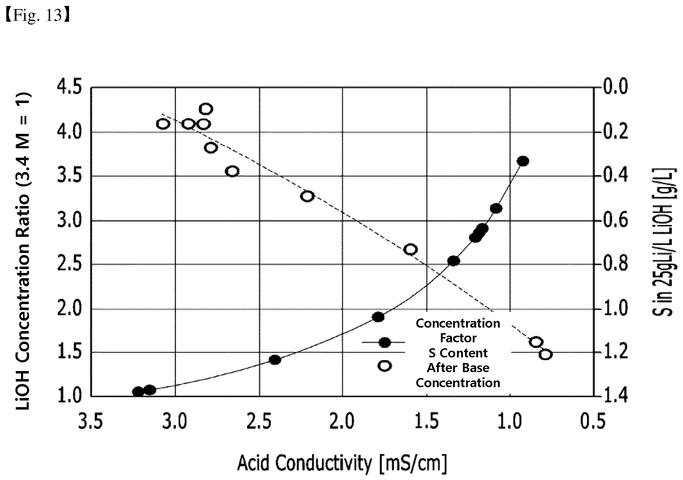

As the concentration of the acid and base solutions decreases, additional concentration steps are required to obtain high-concentration LiOH product, such as water removal or evaporation. The required concentration ratio to achieve 3.4 M LiOH is shown in FIG. 13. As indicated, lower feed concentrations necessitate concentration ratios over threefold to reach 3.4 M.

The S impurity content in the LiOH solution was observed to decrease with decreasing feed concentration. FIG. 13 also shows the S content in the final 3.4 M LiOH solution. Notably, S impurity levels in LiOH prepared under low-conductivity conditions were reduced by a factor of 5-10, likely due to more uniform electric field distribution across the BPM during low-concentration operation.

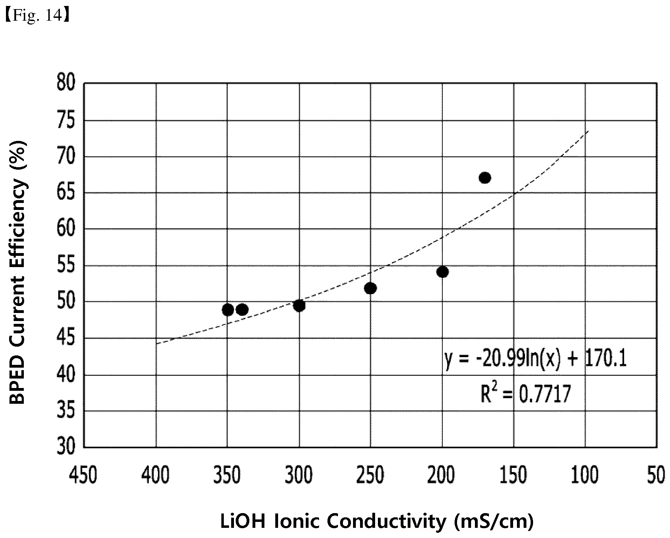

FIG. 14 presents the correlation between the ionic conductivity of the generated lithium hydroxide solution and the current efficiency in Example 5.

As shown in FIG. 14, current efficiency increases with the ionic conductivity of the lithium hydroxide solution, following a nonlinear upward trend. A correlation equation may be derived based on this relationship.

$$(\text{efficiency},\%) = -20.99 \times \ln(S_{\text{LiOH}}) + 170.1$$

Here, (efficiency,%) refers to the current efficiency, $S_{\text{LiOH}}$ represents the ionic conductivity of the discharged lithium hydroxide aqueous solution.

From the above relationship, it can be confirmed that the optimal ionic conductivity of the lithium hydroxide solution-required to achieve economically favorable current efficiency in the lithium salt separation process-can be derived.

Meanwhile, the constants -20.99 and 170.1 in the equation are parameters determined by factors such as the type of membrane applied in the bipolar electrodialysis device, the type of material, system design, and applied current. These constants can be established once the bipolar device is fixed and the types of feedstock and target products are defined.

Accordingly, the experimental results of Example 5 of the present invention were found to satisfy the above-described [Equation 2].

$$(\text{efficiency},\%) = -A \times \ln(S_{\text{LiOH}}) + B$$

Here, (efficiency,%) refers to the current efficiency, $S_{\text{LiOH}}$ represents the ionic conductivity of the discharged lithium hydroxide aqueous solution, $-50 < A < -10$, $50 < b < 250$.

The present invention is not limited to the foregoing embodiments and may be implemented in various other forms. Those of ordinary skill in the art to which the present invention pertains will understand that the invention may be embodied in other specific forms without departing from the technical spirit or essential features of the invention. Therefore, it should be understood that the above-described embodiments are merely illustrative in all respects and not restrictive.

**(Description of Reference Numerals)**

10, 20: Unit pair
110: Anode
120: Cathode
210, 220: Bipolar membrane
311, 312, 313, 321, 322, 323: Spacer gasket
410, 420: Anion exchange membrane
510, 520: Cation exchange membrane
610, 620: Acid compartment
710: Salt compartment
810: Base compartment
910: Anode
920: Cathode

**Claims**

1. A method for separating a lithium salt using a bipolar membrane, comprising:

   introducing a lithium salt aqueous solution into a salt compartment located between an adjacent anion exchange membrane and a cation exchange membrane of a bipolar electrodialysis device;

introducing water into an acid compartment located between an adjacent bipolar membrane and an anion exchange membrane;

introducing water into a base compartment located between an adjacent bipolar membrane and a cation exchange membrane; and

applying an electric current to the bipolar electrodialysis device to obtain an aqueous lithium hydroxide solution from the base compartment and, simultaneously, to obtain an acid aqueous solution as a byproduct from the acid compartment,

wherein the method comprises controlling the concentration of the aqueous lithium hydroxide solution discharged from the base compartment or the concentration of the acid aqueous solution discharged from the acid compartment,

so as to improve the current efficiency of the overall process.

2.  The method for separating a lithium salt using a bipolar membrane of claim 1,
    wherein controlling the concentration of the aqueous lithium hydroxide solution discharged from the base compartment comprises measuring and controlling the pH value of the aqueous lithium hydroxide solution discharged from the base compartment.

3.  The method for separating a lithium salt using a bipolar membrane of claim 1,
    wherein controlling the concentration of the acid aqueous solution discharged from the acid compartment comprises measuring and controlling the pH value of the acid aqueous solution discharged from the acid compartment.

4.  The method for separating a lithium salt using a bipolar membrane of claim 1,

    wherein the current efficiency and the ionic conductivity of the aqueous lithium hydroxide solution discharged from the base compartment or the acid aqueous solution discharged from the acid compartment satisfy the following relationship:

    $$(\text{efficiency}, \%) = -A \times \ln(S_m) + B,$$

    wherein efficiency (%) is the current efficiency, $S_m$ is the ionic conductivity of the discharged base or acid solution, -50 < A < -10, and 50 < B < 250.

5.  The method for separating a lithium salt using a bipolar membrane of claim 1,

    wherein the electrodialysis device comprises a stack of unit pairs each sequentially formed of a bipolar membrane, a spacer gasket, an anion exchange membrane, a spacer gasket, a cation exchange membrane, and a spacer gasket,
    and wherein the last bipolar membrane is in contact with a spacer gasket and a metal electrode.

6.  The method for separating a lithium salt using a bipolar membrane of claim 1,
    wherein introducing water into the acid compartment located between the bipolar membrane and the anion exchange membrane comprises additionally mixing and introducing the acid aqueous solution discharged from the acid compartment.

7.  The method for separating a lithium salt using a bipolar membrane of claim 1,
    wherein introducing water into the base compartment located between the bipolar membrane and the cation exchange membrane comprises additionally mixing and introducing the aqueous lithium hydroxide solution discharged from the base compartment.

【Fig. 1】

【Fig. 2】

【Fig. 3】

【Fig. 4】

【Fig. 5】

【Fig. 6】

(a)

(b)

【Fig. 7】

(a)

(b)

【Fig. 8】

(a)

(b)

【Fig. 9】

【Fig. 10】

【Fig. 11】

【Fig. 12】

(a)

(b)

【Fig. 13】

【Fig. 14】

LiOH Ionic Conductivity (mS/cm)

# INTERNATIONAL SEARCH REPORT

| | International application No. |
|---|---|
| | **PCT/KR2023/018600** |

## A. CLASSIFICATION OF SUBJECT MATTER

**B01D 61/44**(2006.01)i; **C01D 15/00**(2006.01)i

According to International Patent Classification (IPC) or to both national classification and IPC

## B. FIELDS SEARCHED

Minimum documentation searched (classification system followed by classification symbols)

B01D 61/44(2006.01); B01D 61/42(2006.01); B01D 61/46(2006.01); B01J 19/08(2006.01); C01D 15/02(2006.01); C22B 9/10(2006.01); C25B 1/16(2006.01); C25B 9/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬염(lithium salt), 바이폴라(bipolar), 전기투석(electrodialysis), 음이온 교환막 (anion exchange membrane), 양이온 교환막(cation exchange membrane)

## C. DOCUMENTS CONSIDERED TO BE RELEVANT

| Category* | Citation of document, with indication, where appropriate, of the relevant passages | Relevant to claim No. |
|---|---|---|
| X | KR 10-2022-0086862 A (DAEJIN UNIVERSITY CENTER FOR EDUCATIONAL INDUSTRIAL COOPERATION) 24 June 2022 (2022-06-24)<br>See claims 1-14; and paragraphs [0076] and [0154]. | 1-4,6-7 |
| Y | | 5 |
| Y | KR 10-2186074 B1 (DAEJIN UNIVERSITY CENTER FOR EDUCATIONAL INDUSTRIAL COOPERATION) 07 December 2020 (2020-12-07)<br>See paragraph [0051]. | 5 |
| A | KR 10-2018-0046636 A (RESEARCH INSTITUTE OF INDUSTRIAL SCIENCE & TECHNOLOGY) 09 May 2018 (2018-05-09)<br>See entire document. | 1-7 |
| A | KR 10-2016-0129657 A (RESEARCH INSTITUTE OF INDUSTRIAL SCIENCE & TECHNOLOGY) 09 November 2016 (2016-11-09)<br>See entire document. | 1-7 |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2024** | **20 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/018600** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 107299361 A (JIANGSU LITHITECH LITHIUM ENERGY TECHNOLOGY CO., LTD.) 27 October 2017 (2017-10-27)<br>See entire document. | 1-7 |

Form PCT/ISA/210 (second sheet) (July 2022)

**INTERNATIONAL SEARCH REPORT**
Information on patent family members

International application No.

**PCT/KR2023/018600**

| Patent document cited in search report | | | Publication date (day/month/year) | Patent family member(s) | | | Publication date (day/month/year) |
|---|---|---|---|---|---|---|---|
| KR | 10-2022-0086862 | A | 24 June 2022 | KR | 10-2468033 | B1 | 16 November 2022 |
| KR | 10-2186074 | B1 | 07 December 2020 | | None | | |
| KR | 10-2018-0046636 | A | 09 May 2018 | KR | 10-1909724 | B1 | 18 December 2018 |
| KR | 10-2016-0129657 | A | 09 November 2016 | CN | 107787302 | A | 09 March 2018 |
| | | | | CN | 107787302 | B | 04 December 2020 |
| | | | | EP | 3290393 | A1 | 07 March 2018 |
| | | | | EP | 3290393 | B1 | 19 January 2022 |
| | | | | JP | 2018-522709 | A | 16 August 2018 |
| | | | | JP | 6602893 | B2 | 06 November 2019 |
| | | | | KR | 10-1700684 | B1 | 31 January 2017 |
| | | | | US | 10759671 | B2 | 01 September 2020 |
| | | | | US | 2018-0148342 | A1 | 31 May 2018 |
| CN | 107299361 | A | 27 October 2017 | CN | 107299361 | B | 14 June 2019 |

Form PCT/ISA/210 (patent family annex) (July 2022)